# EUROPEAN PATENT APPLICATION

(11) **EP 4 617 304 A1**
(43) Date of publication of application: **17.09.2025**
(21) Application number: 23924178.9
(22) Date of filing: 13.11.2023
(51) Int. Cl.: C08J 5/18, B32B 15/082, B32B 27/30, C08K 3/013, C08L 27/12

(54) **FLUORORESIN SHEET, METHOD FOR PRODUCING SAME, AND METAL-CLAD FLUORORESIN SUBSTRATE CONTAINING SAME**

(30) Priority: 22.02.2023 JP 2023026443
(71) Applicant: Fuji Polymer Industries Co., Ltd., Nagoya-shi, Aichi 450-0002 (JP)
(72) Inventor: KOBAYASHI, Kazuki, Nagoya-shi, Aichi 463-0026 (JP); NONOYAMA, Tomohito, Nagoya-shi, Aichi 463-0026 (JP); KOBAYASHI, Shingo, Nagoya-shi, Aichi 463-0026 (JP)
(74) Representative: Dehns
(86) International application number: PCT/JP2023/040700
(87) International publication number: WO 2024/176534

(57) **Abstract**

A fluororesin sheet 1 includes a fluoropolymer 2 and an inorganic filler 3. The fluoropolymer 2 is oriented in a surface direction of the fluororesin sheet 1. A metal-clad laminate of the present invention includes the fluororesin sheet with a metal foil attached to at least one surface thereof. A method of the present invention includes a first step of mixing an aqueous dispersion of a fluoropolymer and an inorganic filler, forming a compound, and press-molding the compound to form a sheet, and a second step of laminating the sheet and press-molding the sheet to form a sheet. The resulting sheet is rolled, and then dried and degreased. With this, a fluororesin sheet having good handleability, a method for producing the same, and a metal-clad fluororesin substrate including the same are provided without using a glass fiber cloth.

## Description

### Technical field

The present invention relates to a fluororesin sheet useful for printed circuit boards for high-speed communication using high-frequency waves such as millimeter waves and microwaves, a method for producing the same, and a method for producing a metal-clad fluororesin substrate including the same.

### Background Art

With high-speed communication such as 5G, there is currently a strong demand for high-speed communication substrates and antenna substrates with lower transmission loss even when using high-frequency waves such as millimeter waves. In addition, high-density mounting and ultra-thin circuit boards have significantly advanced in information terminals such as smartphones. For high-speed communication such as 5G, printed circuit boards are widely used that are produced by laminating a prepreg, which is obtained by impregnating a low-dielectric glass cloth such as D glass, NE glass, or L glass with thermoplastic resin such as fluororesin or polyphenylene ether, and also with thermosetting resin such as low-dielectric epoxy resin or low-dielectric maleimide resin, and heating and pressure-curing this prepreg.

Patent Document 1 proposes mixing a fluororesin with a low-molecular-weight polytetrafluoroethylene fine powder and an inorganic filler, and infiltrating the resulting mixture into a glass fiber cloth to produce a fluororesin prepreg. Patent Document 2 proposes subjecting a surface of a fluororesin prepreg infiltrated into glass fiber cloth to hydrophilic treatment to have an amino group and a hydroxyl group, and attaching the surface to a metal foil.

### Prior Art Documents

### Patent Documents

[Patent Document 1] JP 2020-50860A
[Patent Document 2] JP 2022-114351A

### Disclosure of Invention

### Problem to be Solved by the Invention

However, there is a problem in that the fluororesin sheet is easy to break and is difficult to handle. The foregoing Patent Documents 1 and 2 improve handleability by infiltrating a prepreg into a glass fiber cloth to make a fluororesin prepreg, whereas there is a demand for a fluororesin sheet that does not use a glass fiber cloth and has good handleability by itself and that for a metal-clad fluororesin substrate including this fluororesin sheet.

To solve the above conventional problem, the present invention provides a fluororesin sheet with good handleability by itself, a method for producing the same, and a metal-clad fluororesin substrate including the same.

### Means for Solving Problem

A fluororesin sheet of the present invention is a fluororesin sheet including: a fluoropolymer; and an inorganic filler, wherein the fluoropolymer is oriented in a surface direction of the fluororesin sheet.

A metal-clad laminate of the present invention includes the above fluororesin sheet with a metal foil attached to at least one surface of the fluororesin sheet.

A method for producing a fluororesin sheet of the present invention is a method for producing a fluororesin sheet that includes a fluoropolymer and an inorganic filler, and the method includes:
a first step of mixing an aqueous dispersion of a fluoropolymer and an inorganic filler, forming a compound, and press-molding the compound to form a sheet; and
a second step of laminating the sheet and press-molding the sheet again to form a sheet,
wherein the obtained sheet is rolled, and then dried and degreased.

### Effects of the Invention

The present invention can provide: a fluororesin sheet having good handleability by itself due to including a fluoropolymer and an inorganic filer, in which the fluoropolymer is oriented in a surface direction of a fluororesin sheet; a method for producing the same; and a metal-clad fluororesin substrate including the same.

### Brief Description of Drawings

[FIG. 1] FIG. 1 is a cross-sectional scanning electron microscope (SEM) image of a fluororesin sheet according to an embodiment of the present invention (magnified 500 times).
[FIG. 2] FIG. 2 is a cross-sectional SEM image of the fluororesin sheet according to the embodiment of the present invention (magnified 1000 times).
[FIG. 3] FIG. 3 is a cross-sectional SEM image of a fluororesin sheet in a comparative example (magnified 500 times).
[FIG. 4] FIG. 4 is a cross-sectional SEM image of a fluororesin sheet in a comparative example (magnified 1000 times).
[FIG. 5] FIG. 5 is a schematic perspective view of a copper-clad fluororesin substrate according to the embodiment of the present invention.
[FIG. 6] FIGS. 6A to 6D are schematic perspective views illustrating a method for producing the fluororesin sheet according to the embodiment of the present invention. These figures are schematic illustrations of an electrode structure.

### Description of the Invention

The present inventors examined problems with the conventional fluororesin sheet, which is obtained by laminating a glass fiber cloth, and metal-clad fluororesin substrate that includes this fluororesin sheet. The conventional fluororesin sheet is difficult to make into a thin film due to thickness restrictions of the glass fiber cloth, and in terms of physical properties, the volume balance being different between the fluororesin and the glass fiber cloth. Thus, it was found that there are problems in that the dielectric constant fluctuates, which results in a tendency for transmission characteristics to deteriorate at high frequencies compared to clothless, and that the high viscosity of fluororesin makes it difficult to infiltrate into the interior, which results in the possibility of air entrapment. The present invention has been completed under such an idea.

The present invention is a fluororesin sheet that includes a fluoropolymer and an inorganic filler. The present invention may be a fluororesin sheet that includes a fluoropolymer and an inorganic filler, and may also be a fluororesin sheet that also includes additives other than the fluoropolymer and the inorganic filler, such as pigment, stabilizer, oil, alcohol, or resin. The fluoropolymer is oriented in a surface direction of the fluororesin sheet. That is, the fluororesin sheet has a laminated structure as seen from a cross-sectional direction. With this structure, the fluororesin sheet has high tensile tenacity in multiple directions and is easy to handle by itself without using a glass fiber cloth. Of course, the use of a glass fiber cloth is not excluded, and a glass fiber cloth may also be laminated at any position. Preferably, no glass fiber cloth is used to make a discrete fluororesin sheet. The fluororesin sheet preferably has a structure in which the fluoropolymer is laminated in layers in a thickness direction. This structure provides high strength in various directions and improved handleability.

The fluororesin sheet preferably has a tensile tenacity of 5 MPa or greater, more preferably greater than 5 MPa, and even more preferably 6 MPa or greater, in both the lengthwise direction and the widthwise direction. While the highest tensile tenacity is best, in practice, the upper limit is preferably 100 MPa or less, and more preferably 95 MPa or less. This provides high strength in various directions and improved handleability.

The above fluororesin sheet preferably has a breaking elongation of 1% or greater, more preferably 5% or greater, and more preferably 10% or greater, in both the lengthwise direction and the widthwise direction. Also, the upper limit is preferably 500% or less, and more preferably 400% or less. This provides high elongation in various directions and improved handleability.

It is preferable that the fluoropolymer is at least one selected from a group consisting of polytetrafluoroethylene polymer (PTFE), a perfluoroalkoxy alkane polymer (PFA), and a perfluoroethylene propene copolymer (FEP). In particular, a combination of PTFE as a main component of 50 mass% or greater and PFA and/or FEP as a secondary component of less than 50 mass% is preferable.

It is preferable that the inorganic filler is at least one selected from a group consisting of silicon oxide, aluminum oxide, titanium oxide, aluminum nitride, boron nitride, silicon nitride, barium titanate, barium sulfate, and magnesium hydroxide. These serve as reinforcing and/or thermally conductive materials. A reinforcing material can increase the strength of the sheet, and a thermally conductive material can transfer heat from a heat generating member such as a semiconductor to a heat dissipation material.

The amount of the inorganic filler contained in the fluororesin sheet is preferably 100 to 1000 parts by volume per 100 parts by volume of the fluororesin, more preferably 150 to 900 parts by volume, and even more preferably 200 to 800 parts by volume. This improves reinforcement and/or thermal conductivity.

Each particle of the inorganic filler is preferably from 0.01 to 100 µm, more preferably from 0.1 to 90 µm, and even more preferably from 0.1 to 80 µm, in terms of D50: median diameter in a cumulative particle size distribution based on volume, measured by a laser diffraction light scattering method. This improves reinforcement and/or thermal conductivity.

The thermal conductivity of the fluororesin sheet is preferably 0.1 to 10 W/m·K, more preferably 0.2 to 10 W/m·K, and even more preferably 0.3 to 10 W/m·K. This makes thermal conductivity favorable.

The thickness of the fluororesin sheet is preferably 0.05 to 10.0 mm, more preferably 0.1 to 9 mm, and even more preferably 0.12 to 8 mm. This allows the fluororesin sheet to be applied to various types of circuit boards.

The mass per unit area of the fluororesin sheet is preferably 80 to 40000 g/m², more preferably 160 to 30000 g/m², and more preferably 200 to 20000 g/m². This makes it possible to produce different types of circuit boards that have different characteristics.

It is preferable that the fluororesin sheet is able to be adhered to a metal foil having a surface roughness Rz of 0.85 or greater and 2.0 or less, and has an adhesive strength with the metal foil of up to 40 N/cm in terms of peel strength. The peel strength is more preferably 5.0 to 40 N/cm, and even more preferably 5.3 to 40 N/cm. This allows the fluororesin sheet to be applied to various types of circuit boards. Further, the solder heat resistance is preferably such that when a 50 mm square sample of a copper-clad fluororesin substrate is floated in a solder bath at a temperature of 288°C for 10 minutes, its copper foil peels or does not swell. This improves processability in soldering operations.

A metal-clad fluororesin substrate of the present invention includes any of the above-described fluororesin sheets with a metal foil attached to at least one surface thereof. Preferably, the metal foil is attached to both surfaces or to a plurality of layers. This allows the metal-clad fluororesin substrate to be applied to many types of circuit boards.

It is preferable that the metal-clad fluororesin substrate has a dielectric loss tangent of 0.0001 to 0.003 at a frequency of 10 GHz. It is preferable that the metal-clad fluororesin substrate has a dielectric constant of 1.5 to 20 at a frequency of 10 GHz. This allows the metal-clad fluororesin substrate to be applied to high-frequency circuit boards.

It is preferable that the metal foil is a copper foil. This allows the metal-clad fluororesin substrate to be applied to high-frequency circuit boards.

A production method of the present invention includes the following steps.
(1) First step:
   an aqueous dispersion of a fluoropolymer and an inorganic filler are mixed to form a compound, and then press-molded to form a sheet. The term "compound" here has the same meaning as green body. It is preferable to perform press-molding at a normal temperature (room temperature) and at a pressure of 0.5 to 4.0 MPa. For the compound, a mixing method such as self-rotating mixing, kneading with a kneader, shaking, three-roll mixing, or a pot mill can be employed.
(2) Second step:
   The above sheet is laminated and press-molded again to form a sheet. It is preferable to perform press-molding at a normal temperature (room temperature) and at a pressure of 0.15 to 2.5 MPa. This lamination and press-molding may be repeated a plurality of times. The plurality of times is preferably 2 to 20 times, and more preferably 3 to 15 times. The lamination is preferably at least one lamination selected from a group consisting of unidirectional lamination (parallel lamination), multidirectional lamination (cross lamination), and a combination thereof. Consequently, the fluoropolymer has a structure in which it is laminated in the thickness direction of the fluororesin sheet and is oriented in the surface direction thereof. In addition, by repeating the lamination and press-molding a plurality of times, the fluoropolymer has a structure in which it is entangled with the inorganic filler and covers the inorganic filler. This provides a structure in which interfacial peeling between the inorganic filler and the fluoropolymer is eliminated. The high tensile tenacity in a plurality of directions and the good handleability that the fluororesin sheet has by itself without using a glass fiber cloth mentioned above are due to a synergistic effect achieved by the structure in which the fluoropolymer is laminated in the thickness direction of the fluororesin sheet and oriented in the surface direction thereof and the structure in which interfacial peeling between the inorganic filler and the fluoropolymer is eliminated.
(3) Rolling, drying, and degreasing step:
   The resulting sheet is rolled, and then dried and degreased. The rolling is preferably rolling with rolls. The drying is preferably air drying (air drying at room temperature). The degreasing is preferably heat treatment at 200 to 300°C for 5 to 24 hours. This eliminates unnecessary organic matter.

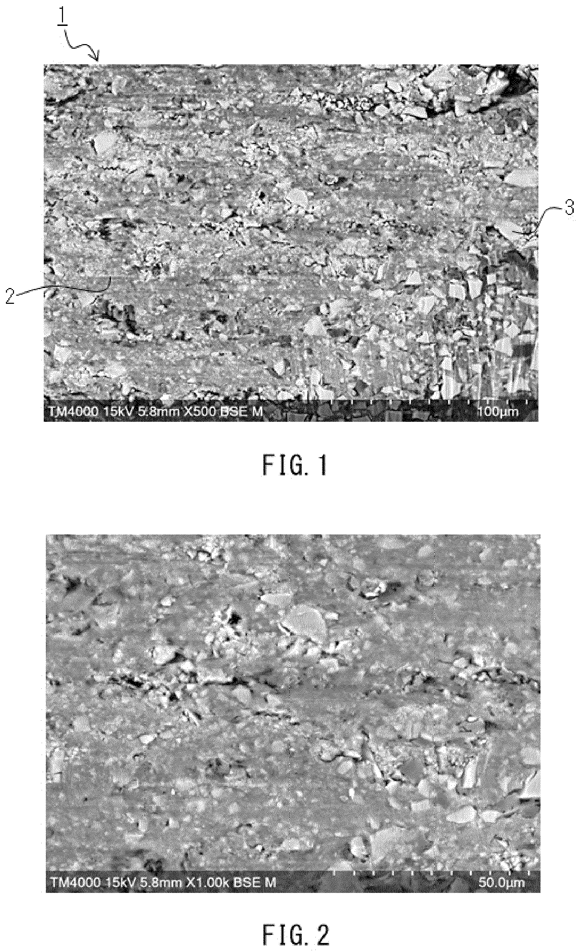

The following description will be made with reference to the drawings. In the following drawings, the same reference numerals denote the same elements. FIG. 1 is a cross-sectional scanning electron microscope (SEM) image of a fluororesin sheet 1 according to an embodiment of the present invention (magnified 500 times). A fluoropolymer 2 is oriented in the surface direction of the fluororesin sheet 1. That is, the fluoropolymer 2 is arranged laterally. The fluoropolymer 2 is entangled with an inorganic filler 3 and covers the inorganic filler, and no clear sea-island structure is seen between the inorganic filler 3 and the fluoropolymer 2. Note that vertical lines in FIG. 1 are cut scratches that were made when the cross section was cut by ion milling. Further, it can be observed that the fluororesin sheet 1 has a structure in which the fluoropolymer 2 is laminated in layers in the thickness direction. That is, the laminated structure is formed as seen from the cross-sectional direction. FIG. 2 is a cross-sectional SEM image of the fluororesin sheet according to the embodiment of the present invention (magnified 1000 times).

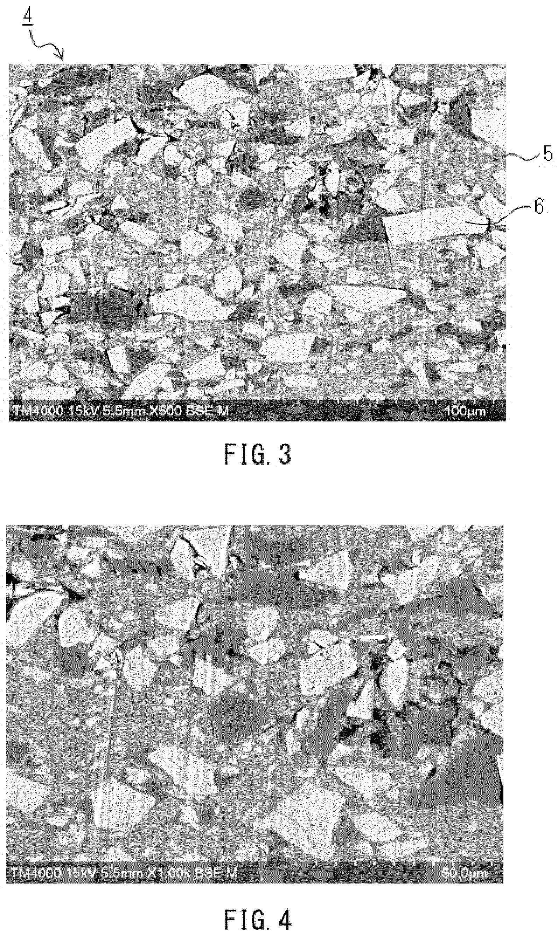

FIG. 3 is a SEM image of a fluororesin sheet 4 in a comparative example (magnified 500 times). The fluororesin sheet 4 is produced by a method that omits the second step (lamination-press step) of the above-described method of the present invention. A fluoropolymer 5 and an inorganic filler 6 have a clear sea-island structure, and the orientation of the fluoropolymer 5 is not seen. Further, the interface between the inorganic filler 6 and the fluoropolymer 5 can be clearly observed, and there are also some portions where interfacial peeling can be seen. Vertical lines in FIG. 3 are cut scratches that were made when the cross section was cut by ion milling. FIG. 4 is a cross-sectional SEM image of the fluororesin sheet in the comparative example (magnified 1000 times).

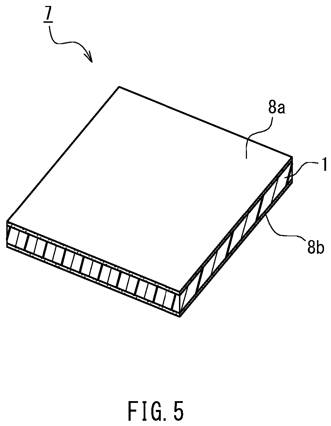

FIG. 5 is a schematic perspective view of a copper-clad fluororesin substrate 7 according to the embodiment of the present invention. In the copper-clad fluororesin substrate 7, copper foils 8a and 8b are attached to both surfaces of the fluororesin sheet 1. The fluororesin sheet 1 is heated to a temperature near the melting point of 326°C and attached to the copper foils 8a and 8b by heat pressing. During this attachment, an adhesive may be used.

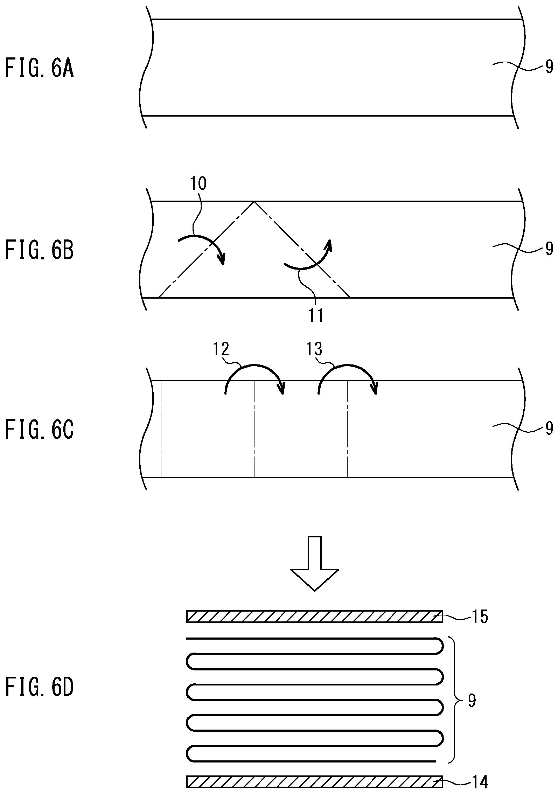

FIGS. 6A to 6D are schematic perspective views illustrating a method for producing the fluororesin sheet according to the embodiment of the present invention. FIG. 6A shows a fluororesin sheet 9 obtained in the first step of the above-described method of the present invention. FIG. 6B shows an example of cross-laminating the fluororesin sheet 9 as indicated by arrows 10 and 11. Any angle of bending may be adopted. FIG. 6C shows the fluororesin sheet 9 after being subjected to parallel lamination as indicated by arrows 10 and 11. Mixed lamination in which the cross lamination in FIG. 6B and the parallel lamination in FIG. 6C may also be adopted. The fluororesin sheet 9 laminated in this manner is pressed by press plates 14 and 15 as shown in FIG. 6D. Next, the rolling, drying, and degreasing step is performed as described above, and the fluororesin sheet of the present invention is obtained.

### [Examples]

The following description will be made with reference to the examples. The present invention is not limited to the examples. Various parameters were measured in the following manner.

### <Dielectric Constant, Dielectric Loss Tangent>

Measurements were performed using a network analyzer (manufactured by Keysight Technologies) with a cavity resonator perturbation method.

### <Effective Dielectric Constant, Transmission Loss>

Transmission losses were measured using a network analyzer (manufactured by Keysight).

### <Peel Strength>

Peel-off strength was measured by peeling at 90° according to JIS C6481 (1996) using a tensile tester (manufactured by Shimadzu Corporation).

### <Tensile Strength, Elongation>

Tensile tests and elongation tests were performed according to ASTM D638 (1995) using a tensile tester (manufactured by Shimadzu Corporation). Note that the tensile strength and elongation were measured on a 5 cm wide sample and converted to per cm. The term "elongation" refers to breaking elongation.

### <Specific Gravity>

Specific gravity was measured according to ASTM D792:20 (2020) using a specific gravity meter (manufactured by Mettler Toledo). The liquid used is ethanol.

### <Thermal Resistance, Thermal Conductivity>

Thermal resistance was measured using a method conforming to ASTM D5470 (2017) (a sample is sandwiched between aluminum blocks, a load of 5 kgf is applied thereto, the thermal resistance value is measured from the temperature difference between the top and bottom as well as the power, and the thermal conductivity is calculated from the thermal resistance value). Further, thermal conductivity was calculated from the slope thereof.

### <Solder Heat Resistance>

Solder heat resistance was confirmed by floating a 50 mm square sample of the copper-clad fluororesin substrate in a solder bath at a temperature of 288°C for 10 minutes and checking whether or not the copper foil peeled off or swell.

### <Other Physical Properties>

Measurements were performed in accordance with the industry standard testing.

### (Example 1)

### <Raw Material>

132 volume parts of silica (LS-44: manufactured by Marukama Kamado Touryou) with D50: median diameter of 13.5 pm in a cumulative particle size distribution based on volume, measured by a laser diffraction light scattering method, were added to a container. Then, an aqueous dispersion (60% concentration) of polytetrafluoroethylene (31-JR: manufactured by Chemours-Mitsui) was added such that the resin content was 95 parts by volume, and an aqueous dispersion (56% concentration) of perfluoroethylene (335-JR: manufactured by Chemours-Mitsui) was added such that the resin content was 5 parts by volume. The resulting mixture was stirred to obtain a dispersion.

### <Mixing>

The resulting dispersion was stirred for 2 minutes with a propeller machine operating at a rotation speed of 60 to 70 rpm.

### <Solidification>

The resulting dispersion was solidified.

### <Forming Compound (Forming Green Body)>

The above-solidified dispersion was scooped out with a spatula or the like and kneaded.

### <Molding>

The resulting green body was placed in a metal frame with a 14 cm square inner frame and a thickness of 1.5 cm, and was press-molded at room temperature under a pressure of 2.0 MPa.

### <Lamination-Press>

A molded body that had been soaked above for a sufficient period of time was placed in a metal frame with a 21 cm square inner frame and a thickness of 0.65 cm, and press-molded at room temperature under a pressure of 1.5 MPa. Thereafter, the lamination shown in FIG. 6A and the lamination shown in FIG. 6B were performed once each, and then press-molding was performed at room temperature under a pressure of 1.0 MPa.

### <Rolling>

The resulting molded body was placed on a 100 µm thick polyethylene terephthalate (PET) film and rolled with a roll spacing of 3.5 mm. At this time, it is desirable to set the draft to a low value. Rolling was repeated until a predetermined thickness (about 0.16 mm) was reached.

### <Drying>

The sheet obtained by the above rolling was dried while placed on the PET film.

### <Degreasing>

The resulting dried sheet was cut to predetermined dimensions, placed in an oven, and heated at 250°C for 12 hours.

### <Heating Press>

An elongated degreased sheet obtained in the degreasing process was cut to a predetermined size (as an example, 200 mm length and 300 mm width), layered in the order of a copper foil (product name: "CF-T4X-SV18" manufactured by Fukuda Metal Foil & Powder), the degreased sheet, and a copper foil, gradually heated to a temperature of 350°C, and vacuum-heated and pressed at 0.9 kPa vacuum and 8.0 MPa pressure to form a laminated body. The dimensions of the obtained copper-clad fluororesin substrate were 200 mm in length, 300 mm in width, 0.127 mm in thickness, and 555 g/m² in mass per unit area.

The discrete fluororesin sheet for evaluation was pressed by itself under the same conditions as above, without using copper foil. The dimensions of the obtained discrete fluororesin sheet were 200 mm in length, 300 mm in width, 0.127 mm in thickness, and 272 g/m² in mass per unit area.

### (Comparative Example 1)

Comparative example 1 was carried out in the same manner as Example 1 except that the lamination-press step was not performed. However, the processability after the rolling was poor, and it was difficult to obtain an elongated fluororesin sheet. This was because the fluororesin sheet was weak and easily torn in the lengthwise direction without the lamination-press step.

Although an elongated fluororesin sheet could not be obtained, a small sheet of about 100 mm in length and about 60 mm in width was obtained. Thus, this sheet was rolled, dried, degreased, and heat-pressed in the same manner as Example 1 to obtain a discrete fluororesin sheet for evaluation.

### (Example 2)

### <Raw Material>

265 volume parts of alumina with D50: median diameter of 2 µm in a cumulative particle size distribution based on volume and alumina with D50: median diameter of 10 µm, measured by a laser diffraction light scattering method, were added to a container. Then, an aqueous dispersion (60% concentration) of polytetrafluoroethylene (31-JR: manufactured by Chemours-Mitsui) was added such that the resin content was 95 parts by volume, and an aqueous dispersion (56% concentration) of perfluoroethylene (335-JR: manufactured by Chemours-Mitsui) was added such that the resin content was 5 parts by volume. The resulting mixture was stirred to obtain a dispersion.

### <Mixing>

The resulting dispersion was stirred for 2 minutes with a propeller machine operating at a rotation speed of 60 to 70 rpm.

### <Solidification>

The resulting dispersion was solidified.

### <Making Compound (Making Green Body)>

The above-solidified dispersion was scooped out with a spatula or the like and kneaded.

### <Molding>

The above-obtained green body was placed in a metal frame having an inner frame of 14 cm square and a thickness of 1.5 cm, and was press-molded at room temperature under a pressure of 0.65 MPa.

### <Lamination-Press>

A molded body that had been soaked above for a sufficient period of time was placed in a metal frame having an inner frame of 21 cm square and a thickness of 0.65 cm, and press-molded at room temperature under a pressure of 0.40 MPa. Thereafter, the lamination shown in FIG. 6A and the lamination shown in FIG. 6B were performed twice each, and then press-molding was performed at room temperature under a pressure of 0.35 MPa.

### <Rolling>

The resulting molded body was placed on a 100 pm thick polyethylene terephthalate (PET) film and rolled with a roll spacing of 3.5 mm. At this time, it is desirable to set the draft to a low value. Rolling was repeated until a predetermined thickness (about 0.127 mm) was reached.

### <Drying>

The sheet obtained by the above rolling was dried while placed on the PET film.

### <Degreasing>

The resulting dried sheet was cut to predetermined dimensions, placed in an oven, and heated at 250°C for 12 hours.

### <Heating Press>

An elongate degreased sheet obtained in the degreasing process was cut to a predetermined size, layered in the order of a copper foil (product name: "CF-T4X-SV18" manufactured by Fukuda Metal Foil & Powder), the degreased sheet, and a copper foil, gradually heated to a temperature of 350°C, and vacuum-heated and pressed at 0.9 kPa vacuum and 8 MPa pressure to form a laminated body. The dimensions of the obtained copper-clad fluororesin substrate were 200 mm in length, 300 mm in width, 0.127 mm in thickness, and 693 g/m² in mass per unit area.

The discrete fluororesin sheet for evaluation was pressed by itself under the same conditions as above, without using copper foil. The dimensions of the obtained discrete fluororesin sheet were 200 mm in length, 300 mm in width, 0.127 mm in thickness, and 410 g/m² in mass per unit area.

FIG. 1 shows a cross-sectional scanning electron microscope (SEM) image of this discrete fluororesin sheet (magnified 500 times). As is apparent from FIG. 1, the fluoropolymer 2 was laminated in the thickness direction of the fluororesin sheet 1 and was oriented in the surface direction thereof. That is, the fluoropolymer 2 is arranged laterally. The fluoropolymer 2 is entangled with the inorganic filler 3 and covers the inorganic filler, and no clear sea-island structure is seen between the inorganic filler 3 and the fluoropolymer 2. As is apparent from FIGS. 1 and 2, it can also be confirmed that the fluororesin sheet 1 has a laminated structure.

### (Comparative Example 2)

Comparative example 2 was carried out in the same manner as Example 2 except that the lamination-press step was not performed. However, the processability after the rolling was poor, and it was difficult to obtain an elongated fluororesin sheet. This was because the fluororesin sheet was weak and easily torn in the lengthwise direction without the laminate-press step.

Although an elongated fluororesin sheet could not be obtained, a small sheet of about 100 mm in length and about 60 mm in width was obtained. Thus, this sheet was rolled, dried, degreased, and heat-pressed in the same manner as Example 2 to obtain a discrete fluororesin sheet for evaluation.

FIG. 3 shows a cross-sectional scanning electron microscope (SEM) image of this discrete fluororesin sheet (magnified 500 times). As is apparent from FIG. 3, a fluoropolymer 5 and an inorganic filler 6 had a clear sea-island structure, and the orientation of the fluoropolymer 5 was not seen. Further, the interface between the inorganic filler 6 and the fluoropolymer 5 could be clearly observed, and there were also some portions where interfacial peeling could be seen. This state can also be confirmed from FIG. 4.

The physical properties of the discrete fluororesin sheet alone resulting from above are summarized in Table 1, and the physical properties of the copper-clad fluororesin substrate are summarized in Table 2.

**[Table 1]**

| | Ex. 1 | Comp. Ex. 1 | Ex. 2 | Comp. Ex. 2 |
|---|---|---|---|---|
| Mass (g/m²) | 272 | 269 | 410 | 425 |
| Tensile Strength (MPa) | | | | |
| Lengthwise direction | 7.8 | 7.6 | 5.5 | 4.6 |
| Widthwise direction | 8.2 | 4.5 | 6.0 | 5.3 |
| Elongation (%) | | | | |
| Lengthwise direction | 74.4 | 7.6 | 1.66 | 0.69 |
| Widthwise direction | 236.2 | 4.5 | 1.61 | 1.57 |
| Specific Gravity | 2.14 | 2.12 | 3.23 | 3.35 |
| Thermal Conductivity (W/m·K) | 0.46 | 0.05 | 2.04 | 0.17 |

**[Table 2]**

| | Ex. 1 | Ex. 2 |
|---|---|---|
| Dielectric Constant (10 GHz) | 2.58 | 4.91 |
| Dielectric Loss Tangent (10 GHz) | 0.0013 | 0.0004 |
| Effective Dielectric Constant | 2.65 | 3.65 |
| Peel Strength (N/cm) | 24 | 8.7 |
| Solder Heat Resistance (min.) | >10 | >10 |
| Thermal Expansion Coefficient | | |
| ppm-Z | 15.1 | 29.7 |
| ppm-X | 24.2 | 12.6 |
| ppm-Y | 23.2 | 12.7 |

As is apparent from Tables 1 and 2, in Examples 1 and 2, a fluororesin sheet with good handleability could be obtained without using a glass fiber cloth, and it was confirmed that both physical properties and electrical properties were good.

### [Industrial availability]

The fluororesin sheet and the metal-clad fluororesin substrate including the same according to the present invention is useful for, for example, wiring boards for IoT devices and wearable devices, high-speed transmission FPCs, transceivers, high-speed communication boards, antenna boards, smartphones, smart watches, communication base station antennas, collision sensors, distance sensors, sensors in train monitoring systems, satellite communication antennas, intersection inspection sensors, security image sensors, runway foreign object detection systems, and river water level monitoring sensors with low transmission loss even when using high-frequency waves such as millimeter waves.

### Description of Reference Numerals

- 1, 4, 9: Fluororesin sheet
- 2, 5: Fluoropolymer
- 3,6: Inorganic filler
- 7: Copper-clad fluororesin substrate
- 8a, 8b: Copper foil
- 14,15: Press plate

## Claims

1. A fluororesin sheet comprising:
a fluoropolymer; and
an inorganic filler,
wherein the fluoropolymer is oriented in a surface direction of the fluororesin sheet.

2. The fluororesin sheet according to claim 1, wherein the fluororesin sheet has a tensile tenacity of 5 MPa or greater in both a lengthwise direction and a widthwise direction.

3. The fluororesin sheet according to claim 1 or 2, wherein the fluoropolymer is at least one polymer selected from a group consisting of polytetrafluoroethylene (PTFE), a perfluoroalkoxy alkane polymer (PFA), and a perfluoroethylene propene copolymer (FEP).

4. The fluororesin sheet according to any one of claims 1 to 3, wherein the inorganic filler is at least one material selected from a group consisting of silicon oxide, aluminum oxide, titanium oxide, aluminum nitride, boron nitride, silicon nitride, barium titanate, barium sulfate, and magnesium hydroxide.

5. The fluororesin sheet according to any one of claims 1 to 4, wherein the fluororesin sheet comprises the inorganic filler of 100 to 1000 parts by volume per 100 parts by volume of the fluororesin.

6. The fluororesin sheet according to any one of claims 1 to 5, wherein each particle of the inorganic filler has a D50 of 0.01 to 100 µm, which is a median diameter in a cumulative particle size distribution based on volume, measured by a laser diffraction light scattering method.

7. The fluororesin sheet according to any one of claims 1 to 6, wherein the fluororesin sheet has a thermal conductivity of 0.1 to 10 W/m·K.

8. The fluororesin sheet according to any one of claims 1 to 7, wherein the fluororesin sheet has a thickness of 0.05 to 10.0 mm.

9. The fluororesin sheet according to any one of claims 1 to 8, wherein the fluororesin sheet has a mass per unit area of 80 to 40000 g/m².

10. The fluororesin sheet according to any one of claims 1 to 9, wherein the fluororesin sheet is able to be adhered to a metal foil having a surface roughness Rz of 0.85 to 2.0, and has an adhesive strength with the metal foil of up to 40 N/cm in terms of peel strength.

11. A metal-clad fluororesin substrate comprising the fluororesin sheet according to any one of claims 1 to 10 with a metal foil attached to at least one surface of the fluororesin sheet.

12. The metal-clad fluororesin substrate according to claim 11, wherein the metal-clad fluororesin substrate has a dielectric loss tangent of 0.0001 to 0.003 at a frequency of 10 GHz.

13. The metal-clad fluororesin substrate according to claim 11 or 12, wherein the metal-clad fluororesin substrate has a dielectric constant of 1.5 to 20 at a frequency of 10 GHz.

14. The metal-clad fluororesin substrate according to any one of claims 11 to 13, wherein the metal foil is a copper foil.

15. A method for producing the fluororesin sheet according to any one of claims 1 to 10, the method comprising:
a first step of mixing an aqueous dispersion of a fluoropolymer and an inorganic filler, forming a compound, and press-molding the compound to form a sheet; and
a second step of laminating the sheet and press-molding the sheet again to form a sheet,
wherein the obtained sheet is rolled, and then dried and degreased.

16. The method for producing the fluororesin sheet according to claim 15, wherein the lamination of the sheet in the second step is at least one lamination selected from a group consisting of unidirectional lamination, multidirectional lamination, and a combination thereof.
